# EUROPEAN PATENT APPLICATION

(11) **EP 4 628 725 A1**
(43) Date of publication of application: **08.10.2025**
(21) Application number: 24168673.2
(22) Date of filing: 05.04.2024
(51) Int. Cl.: F03D 13/10

(54) **ROTOR BLADE LANDING SYSTEM**

(71) Applicant: Siemens Gamesa Renewable Energy A/S, 7330 Brande (DK)
(72) Inventor: D, Venkatesh, 627 852 Oormelalagian, Tenkasi (IN)
(74) Representative: SGRE-Association

(57) **Abstract**

The invention describes a landing system (1) for use in a rotor blade installation procedure, which landing system (1) comprises a guide arm (10); a mounting assembly configured to secure the guide arm (10) to the rotor blade (20) such that the guide arm (10) extends beyond the root end (20R) of the rotor blade (20); and a guide arm aperture (22A) formed in a reinforcing plate (221) of the pitch system (21) of that rotor blade (20), which guide arm aperture (22A) is dimensioned to allow the guide arm (10) to pass into the interior of the hub (21) during the rotor blade installation procedure. The invention further describes a method of installing a rotor blade (20) at the hub (21) of a wind turbine (2) using such a landing system (1).

## Description

### Background

The rotor blades of a present-day wind turbine can be very long, for example a rotor blade can have a length of 80 m or more and is correspondingly heavy, with a mass in the order of ... metric tonnes. It is challenging to attach such a rotor blade to the hub of the wind turbine drivetrain, particularly in the case of an offshore installation. It is known to suspend a rotor blade horizontally during the hoisting and mounting procedures. To this end, the rotor blade airfoil can be held in a suitable frame or lifting fitting, which is raised by crane and carefully manoeuvred to align the circular root end with the corresponding circular pitch system at the hub.

The hub and nacelle meet at an interface, where the rotatory drivetrain is supported by a main bearing. Generally, the front or upwind end of the nacelle is significantly wider than the hub at this interface (The terms upwind and downwind are used herein in the accepted sense to refer to a part in terms of its position along the drivetrain, the outermost end of the hub being assumed to point "upwind", and the rear end of the nacelle being assumed to point "downwind"). However, in a wind turbine design in which the diameter of a pitch ring is almost as large as the depth of the hub, there is very little clearance between the nacelle and the root end portion of a mounted rotor blade. This presents a challenge during rotor blade installation, since any unfavourable displacement of the rotor blade can result in collision between its root end and the nacelle. To avoid collisions and ensuing damage, it is necessary to align the root end very precisely to the pitch ring as the rotor blade is brought into position close to the hub. However, wind gusts and lift forces acting on the rotor blade can result in unfavourable oscillation and displacement of the rotor blade.

To avoid such problems, it is known to use an assistive system or "landing system" to guide a suspended rotor blade towards its pitch ring. In one approach, an outwardly extending guide arm is attached to an outer reinforcing plate of the pitch system, and a complementary "catcher" is mounted in the interior of the rotor blade root end. As the rotor blade is brought close to the pitch ring, these elements engage to "catch" the rotor blade and keep it in alignment as it moves closer to the pitch ring. The outwardly extending arm of such a landing system can be several metres in height, and the complete landing system of a rotor blade can have a mass of several hundred kilograms. On account of the large dimensions, the components of the landing system generally remain in the interior of the rotor blade after connection to the pitch system, i.e. the landing system is a single-use system. In a typical configuration of three rotor blades, the cost of a single-use concept is significant, and the combined weight of the landing systems can result in unfavourably large loads acting on the pitch systems, the hub, the main bearing and the rest of the wind turbine drivetrain.

Furthermore, particularly in the case of an offshore installation, the nacelle unit (including the hub) and rotor blades are transported by ship to the installation site. Before lifting the nacelle unit into place on the wind turbine tower, it is necessary to mount a landing system to a reinforcing plate of each pitch ring. This procedure can be time-consuming and adds to the overall costs. It is not practicable to perform this step at the manufacturing facility, i.e. prior to transport by ship, since the outwardly extending arms of the landing systems would make it difficult to safely transport such a nacelle unit: an impact to the outwardly extending arm of a landing system can result in severe damage to the pitch system. The purpose of the reinforcing plates of a pitch system is to distribute loads evenly about the pitch bearing, thus avoiding ovalization of the circular pitch ring, and it is important to avoid damage to these parts.

It is therefore an object of the invention to provide a rotor blade landing system that overcomes the problems outlined above.

This object is achieved by the claimed landing system and by the claimed method of installing a rotor blade at the hub of a wind turbine.

### Description

In the following, it shall be understood that the landing system is used in a rotor blade installation procedure in which the rotor blade is raised by crane to hub height for connection to a pitch system. The pitch system shall be understood to comprise a pair of reinforcing plates arranged at a distance apart. As explained above, the purpose of the reinforcing plates is to distribute loads evenly about the pitch bearing, thus avoiding ovalization of the circular pitch ring. The rotor blade is connected in the usual manner to the pitch system by an annular arrangement of bolts.

According to the invention, the landing system comprises a guide arm; a mounting assembly configured to secure the guide arm to the rotor blade such that the guide arm extends beyond the root end of the rotor blade in the direction of the hub; and a guide arm aperture formed in a reinforcing plate of the pitch system of that rotor blade, which guide arm aperture is dimensioned to allow the guide arm to pass through the pitch system and into the interior of the hub during the rotor blade installation procedure.

The inventor has realised that improvements to the installation procedure can be achieved by reversing the direction of the guide arm and - instead of mounting it to enter the rotor blade interior - mounting it in the reverse direction to enter the hub interior. The invention can reduce the time required to perform the rotor blade installation procedures for a wind turbine since it requires less effort to attach guide arms to the end of each rotor blade than to attach them to the outer reinforcing plates of the pitch systems. Furthermore, as will be explained in the following, the guide arm of the inventive landing system can be detached and removed with relatively low effort after completion of the rotor blade installation procedure. Since the guide arm can be re-used, this aspect of the invention contributes to a reduction in the overall costs. Furthermore, removal of the guide arms - which can have a combined mass of several hundred kg as explained above - overcomes the problem of unfavourable loading known from the prior art.

According to the invention, the method of installing a rotor blade at the hub of a wind turbine using such a landing system comprises steps of mounting the guide arm of the landing system to the rotor blade; providing a guide arm aperture in a reinforcing plate of the corresponding pitch system; lifting the rotor blade to hub height and then manoeuvring the rotor blade to insert the guide arm into the reinforcing plate aperture until the root end of the rotor blade meets the pitch system. The rotor blade can then be secured to the pitch system, for example using an annular arrangement of bolts.

Particularly advantageous embodiments and features of the invention are given by the dependent claims, as revealed in the following description. Features of different claim categories may be combined as appropriate to give further embodiments not described herein.

As explained above, the front end of the nacelle is significantly wider than the hub, but the diameter of a pitch ring can be almost as large as the hub depth. This means that the rotor blade root ends are very close to the nacelle, with little clearance in between, in some cases as little as 15 cm - 20 cm. The clearance is only a fraction of the pitch ring diameter, which can be in the order of several metres. During the installation procedure, it is of critical importance to avoid collisions between the root end portion and the nacelle. In the following, it may be assumed that the length of the guide arm is at least as long as the distance by which the nacelle is wider than the hub at their interface.

When a rotor blade has been hoisted to hub height, the guide arm of the inventive landing system effectively points in towards the hub, and the guide arm is therefore referred to in the following as an "inwardly-pointing arm". The guide arm can be mounted to the rotor blade in several ways. For example, the inwardly-pointing arm can be mounted to a circular plate that is arranged to close off the root end of the rotor blade, and apertures to receive the guide arm are formed in both reinforcing plates of the pitch system. After installation of the rotor blade, the guide arm can be removed, and the circular plate remains in place, and may even contribute to the reinforcing function of the pitch system plates. Alternatively, the inwardly-pointing arm can be suspended in the interior of the open root end portion, for example using wires, struts etc. In this embodiment also, apertures to receive the guide arm are formed in both reinforcing plates of the pitch system so that the inwardly-pointing guide arm can enter the hub interior space during the alignment procedure.

In a particularly preferred embodiment of the invention, the outer reinforcing plate is not mounted to the pitch system, but is instead arranged to cover the root end of the rotor blade, and the inwardly-pointing arm is mounted to the outside of this plate so that it points towards the hub when the rotor blade is hoisted into position. In this preferred embodiment, the invention makes use of the fact that the outer reinforcing plate of the pitch system is not actually required for its purpose in load distribution until the rotor blade is mounted to the pitch system. The inventor has realized that the outer reinforcing plate can be put to good use in the proposed "reverse-order" landing system. Until the installation procedure commences, the exposed pitch system can be protected by a suitable temporary covering such as a tarpaulin or similar. In the following, without restricting the invention in any way, it may be assumed that the outer reinforcing plate of the pitch system is "borrowed" in this manner, i.e. that the outer reinforcing plate is mounted to close off the root end of the rotor blade and the guide arm is mounted to the outer reinforcing plate; and the outer reinforcing plate is only mounted in its intended location in the pitch system only upon completion of the rotor blade installation procedure.

The inventive landing system can comprise more than one inwardly-pointing guide arm and a corresponding arrangement of reinforcing plate apertures. For example, the landing system can comprise one guide arm for initial or approximate positioning of the rotor blade root end, and another guide arm with a shorter length, shaped to facilitate precise positioning of the root end relative to the pitch ring in a final stage of the landing procedure. The reinforcing plates of the pitch system will require apertures to receive both guide arms.

In a preferred embodiment of the invention, the landing system comprises only a single guide arm, in a favourably economical realisation. In its simplest form, the guide arm can extend directly outward from the root end of the rotor blade, and can have a uniform cross-section over its length. However, it may be difficult to accurately manoeuvre the rotor blade into position so that the guide arm can enter the reinforcing plate aperture, and it may be necessary to use a relatively large aperture. However, correct alignment of the rotor blade can be made more difficult if the aperture is wider over the entire length of such a "straight" guide arm.

Therefore, in a particularly preferred embodiment of the invention, the guide arm comprises a first "inner" portion with which the guide arm is mounted to the rotor blade, and a second "outer" portion that is narrower than the first portion and/or which is oriented at an angle relative to the first portion.

The inner portion of the guide arm shall be understood as the portion that is located closest to the rotor blade, and the outer portion of the guide arm is located furthest from the rotor blade.

The guide arm's inner portion preferably extends in a direction parallel to a longitudinal axis of the rotor blade. Preferably, the shape of the inner portion matches the shape of a reinforcing plate aperture and is only slightly smaller than the aperture. In the following, it shall be assumed that at least the inner portion of the guide arm has a rectangular or square cross-section, and that the reinforcing plate aperture has the same shape and is only marginally larger.

In a particularly preferred embodiment of the invention, the outer portion of the guide arm tapers towards the tip, i.e. the cross-sectional area of the guide arm reduces towards its tip. The advantage of such a shape is that it is relatively easy to bring the tip of the guide arm towards the reinforcing plate aperture. Once the tip of the guide arm has passed through the aperture, deflections of the rotor blade are limited, preventing collisions between the root end portion and the nacelle.

In a further preferred embodiment of the invention, the outer portion of the guide arm is angled or "bent" relative to the inner portion. In a particularly preferred embodiment of the invention, the outer portion is angled so that it faces the downwind direction during the installation procedure, i.e. the tip is angled towards the nacelle. The benefit of such a configuration is that corrections to the rotor blade alignment are done in a direction parallel to the rotational axis of the hub, and the rotor blade can initially be placed with a more generous clearance to the front end of the nacelle.

Alignment of the rotor blade to the pitch system can be done solely by mating the guide arm and the reinforcing plate aperture, i.e. choosing the aperture shape according to the shape of the guide arm inner portion. However, in a particularly preferred embodiment of the invention, alignment is augmented by a set of rollers arranged at opposite sides of the reinforcing plate aperture. The rollers are placed to allow the guide arm to "glide" past the edges of the aperture without catching. To this end, one roller is placed at the downwind edge of the aperture, and the other roller is placed at the upwind edge of the aperture. In a further preferred embodiment of the invention, another pair of rollers can be positioned at the other two edges of the aperture.

During the rotor blade installation procedure, the guide arm moves through the reinforcing plate aperture(s) and into the hub interior. Once the rotor blade meets the pitch system, it is secured by an annular arrangement of fasteners as will be known to the skilled person.

In a preferred embodiment of the invention, the components of the landing system can then be detached. To this end, a technician can pass through an access aperture of the outer reinforcing plate to enter the rotor blade interior. The technician then removes any fasteners so that the guide arm can be detached. Alternatively, the reinforcing plates can be constructed to allow a technician to access the fasteners through a guide arm aperture, i.e. without needing to enter the rotor blade. In a subsequent step, the components of the landing system are removed, for example by passing them through the hub into the nacelle, from whence they can be removed using the available infrastructure such as an on-board crane or winch.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows the nacelle and hub of an offshore wind turbine in a rotor blade installation stage;
Figure 2 shows a prior art landing system that can be deployed for a wind turbine of the type shown in Figure 1;
Figure 3 shows part of an embodiment of the inventive landing system;
Figure 4 and Figure 5 illustrate further embodiments of the inventive landing system;
Figures 6 - 9 show stages in the inventive mounting procedure;
Figure 10 shows a subsequent stage of the inventive method;
Figure 11 and Figure 12 show a further aspect of the inventive landing system;
Figure 13 illustrates a further aspect of the invention;
Figure 14 shows a further embodiment of the inventive landing system.

In the diagrams, like numbers refer to like objects throughout. Objects in the diagrams are not necessarily drawn to scale.

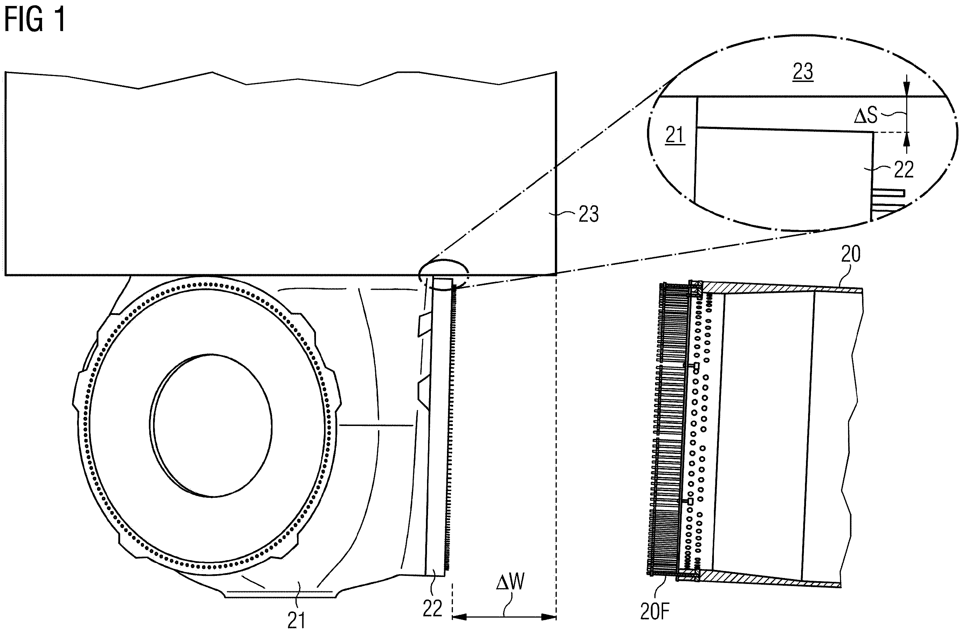

Figure 1 shows the nacelle 23 and hub 21 of a wind turbine in a stage of the installation procedure, as viewed from above. Using a crane, three rotor blades will be raised to hub height for connection to the pitch systems 22. In each case, the hub 21 is turned to bring the corresponding pitch system 22 into position. Here, the pitch system on the right-hand side of the diagram is positioned to receive a rotor blade 20. As explained in the introduction, it is challenging to mount a rotor blade to the hub 21 when there is little space or clearance ΔS between the hub 21 and the nacelle 23 as shown here. This narrow space ΔS presents a problem over the distance ΔW by which the nacelle is wider than the hub, and usually some kind of landing system is deployed to ensure that the rotor blade 20 is moved smoothly through the final few meters of this critical zone ΔW as it approaches the pitch system.

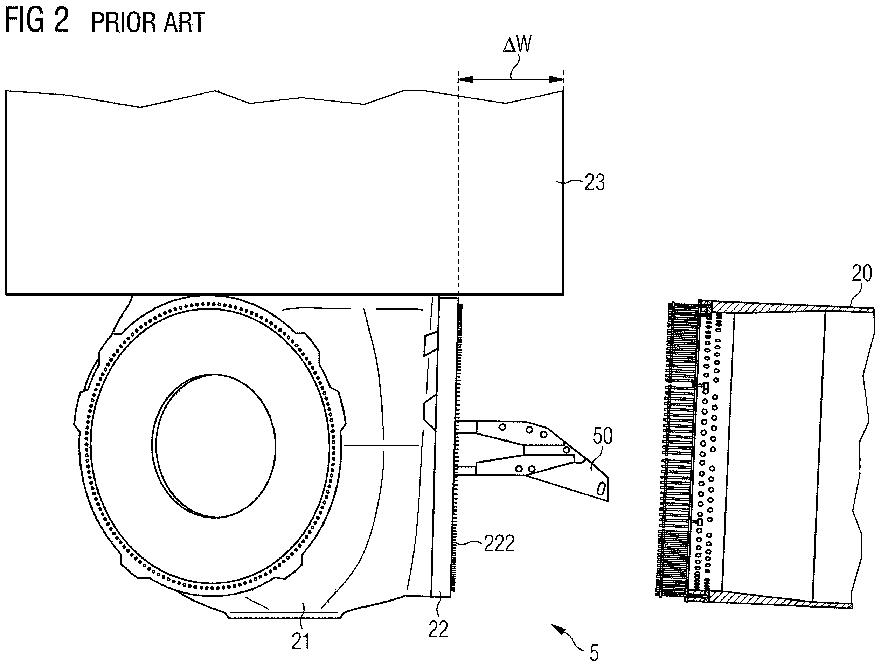

Figure 2 shows a prior art landing system 5 that can be deployed for a wind turbine of the type shown in Figure 1. Each pitch system 22 comprises an outer reinforcing plate 222, and an outwardly protruding arm 50 of the landing system is mounted to the outer reinforcing plate 222 as shown here. The step of mounting the arm 50 to the reinforcing plate 222 can be done before hoisting the hub and nacelle onto the tower, for example at a pre-assembly site, on the deck of an installation vessel, etc. Alternatively, an arm 50 can be mounted to each reinforcing plate 222 after installing the nacelle on the tower. An arrangement of rollers is placed in the interior of the rotor blade 20. As the rotor blade 20 approaches the hub 21, the arm 50 enters the space between the rollers. As soon as the arm 50 makes contact with the rollers, it effectively ensures that the rotor blade 20 remains in alignment with the pitch system 22. The arm 50 extends beyond the critical zone ΔW so that it can effectively maintain correct alignment of the rotor blade 20 as it moves through the critical zone ΔW. For a wind turbine of this type, the width of the nacelle 23 can exceed the width of the hub 21 by a distance ΔW in the order of 2 m. The outwardly protruding arm 50 should exceed this distance ΔW, and the arm 50 of a prior art landing system can have a length of 2.5 m or more. When made of a material such as steel, the mass of the arm 50 can be in the order of 500 kg. As explained above, the arm 50 and the rollers remain in place after connecting the rotor blade 20 to the pitch system 22, and therefore contribute significantly to the overall costs, while also increasing load on the pitch system, hub, main bearing and the rest of the drivetrain.

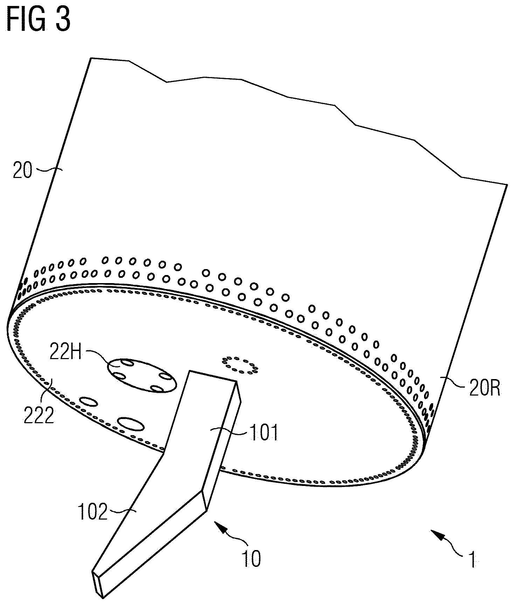

Figure 3 shows an embodiment of part of the inventive landing system 1. The diagram shows the root end 20R of a rotor blade 20 (similar to the rotor blade shown in Figure 1 and Figure 2 above) being hoisted towards the hub of a wind turbine installation. Prior to lifting the rotor blade 20 (e.g. from the deck of an installation vessel), the outer reinforcing plate 222 of the corresponding pitch system 22 has been mounted to the rotor blade 20, and an "inwardly protruding" arm 10 has been mounted to the reinforcing plate 222. The protrusion direction of the arm 10 is defined in terms of the hub, i.e. the arm 10 is oriented to point "inwards" into the hub.

In this exemplary embodiment, the inwardly-pointing arm 10 comprises an inner portion 101 with a constant cross-sectional area, and a tapered outer portion 102. The length of the arm 10 can be similar to the length of the outwardly protruding arm 50 of the prior art approach described in Figure 2, i.e. the inwardly-pointing arm 10 is at least as long as the critical distance ΔW.

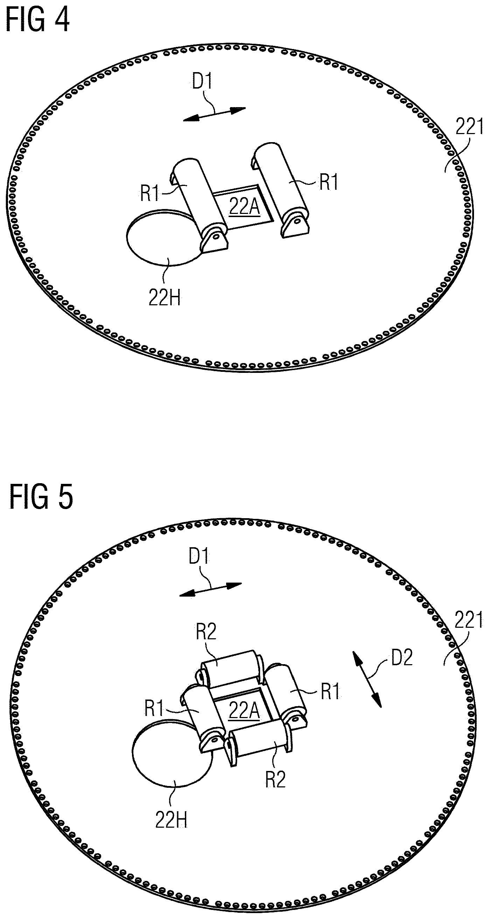

At the level of the hub, the inwardly-pointing arm 10 will be received by a set of rollers R arranged on opposite sides of an aperture 22A in the inner reinforcing plate 221 of the pitch system 22. This assembly is shown in Figure 4, looking onto the outward-directed face of the inner reinforcing plate 221. The shape of the aperture 22A matches the shape of the inner portion 101 of the inwardly-pointing arm 10. In this embodiment, the guiding effect of the rollers R is applied to two opposite sides of the inwardly-pointing arm 10, i.e. the inwardly-pointing arm 10 and the rotor blade 20 are aligned in the axial direction D1 as shown. This axial direction D1 is preferably parallel to the rotation axis of the hub 21.

Figure 5 shows an alternative embodiment in which a further pair of rollers R is placed on the other two sides of the aperture 22A. In this embodiment, the guiding effect of the rollers R is applied to all four sides of the inwardly-pointing arm 10, i.e. the inwardly-pointing arm 10 and the rotor blade 20 are aligned in two orthogonal directions D1, D2 as indicated.

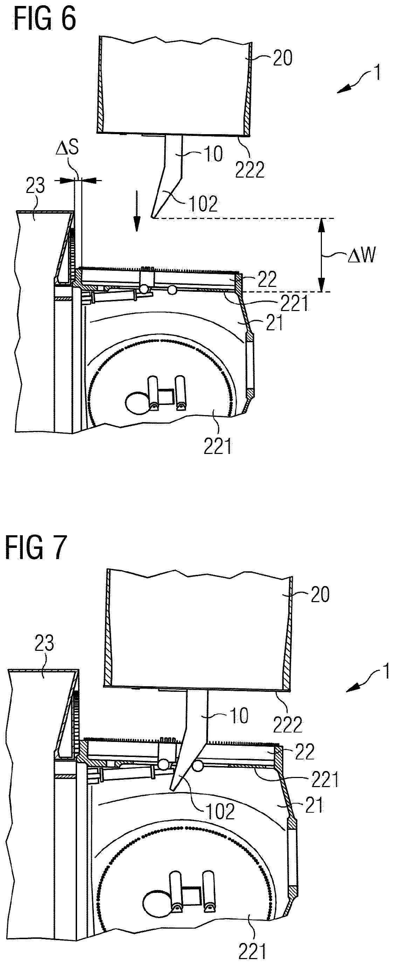

Figures 6 - 9 show stages in the mounting procedure. Again, the view is from above onto the nacelle 23 and hub 21 of a wind turbine installation, and a horizontally-held rotor blade 20 is being hoisted by crane and manoeuvred into position for connection to a pitch system 22. An embodiment of the inventive landing system 1 is being used to align the rotor blade 20 to the pitch system 22. The cutaway view of the hub 21 also shows the inner face of the inner reinforcing ring 221 of another pitch system, equipped with rollers to receive a rotor blade in a subsequent landing procedure.

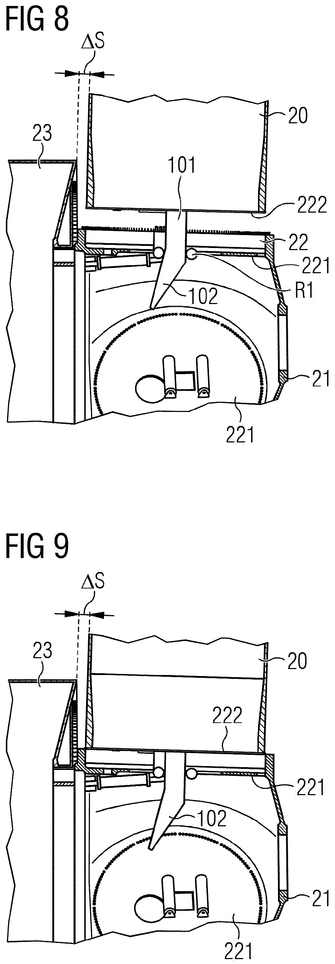

In Figure 6, as the rotor blade 20 approaches the hub 21 and enters the critical zone ΔW, the hoisting apparatus is controlled to guide the tip of the tapered portion 102 into the aperture 22A of the inner reinforcing plate 221. From this point on, as shown in Figures 7 - 9, the roller pair(s) ensure that alignment of the inwardly-pointing arm 10 (and therefore the rotor blade 20 also) is maintained. The placement of the inwardly-pointing arm 10 and the guide roller pair(s) ensures that the root end 20R of the rotor blade 20 cannot collide with the nacelle 23 as it moves through the critical zone ΔW. The tapered portion 102 of the guide arm 10 performs an initial alignment, allowing the rotor blade position to be corrected in the axial direction D1. As illustrated in Figure 8, the straight portion 101 then ensures that the rotor blade alignment is maintained over the corresponding distance. In Figure 9, the root end 20R and pitch system 22 can be joined in the usual manner by an annular arrangement of fasteners 20F. The diagram shows that the inwardly-pointing arm 10 extends into the interior of the hub 21.

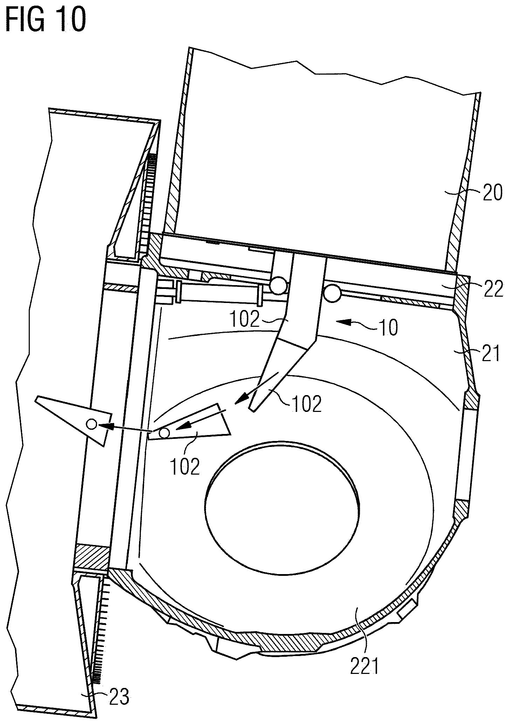

The inventive landing system 1 can be dismantled and removed as shown in Figure 10. To this end, a technician can enter the hub 21 and can dismantle the outer portion 102 and the inner portion 102 of the arm 10. If required, a technician can enter the space between the reinforcing plates 221, 222 for example by means of an access opening 22H shown in Figure 5. The rollers R1, R2 can also be detached and removed. If required, a technician can enter the rotor blade interior by means of a further access opening 22H indicated in Figure 3. The component parts can be removed through the hub 21 and the nacelle 23, from where they can be transferred to the exterior, for example using an on-board nacelle crane, a winch, etc. Alternatively, the hub 21 may be equipped with a hatch and a winch, so that the dismantled parts of the landing system 1 can be lowered directly through a hatch in the hub 21 instead of having to pass them through to the nacelle 23.

The position of the inwardly-pointing arm 10 on the outer reinforcing plate 222 and the position of the matching aperture 22A on the inner reinforcing plate 221 can be chosen according to the space available in the hub 21 and/or according to constraints placed by the pitch system 22. For example, a pitch cylinder 225 may be positioned at the centre of the reinforcing plates 221, 222, and the inwardly-pointing arm 10 and the aperture 22A can be offset from the centre, for example at a suitable distance to the side of the rotor blade rotational axis 20X. Alternatively, the inwardly-pointing arm 10 and the aperture 22A can be offset from the centre of the pitch system 22 towards the "upwind" end of the hub 21.

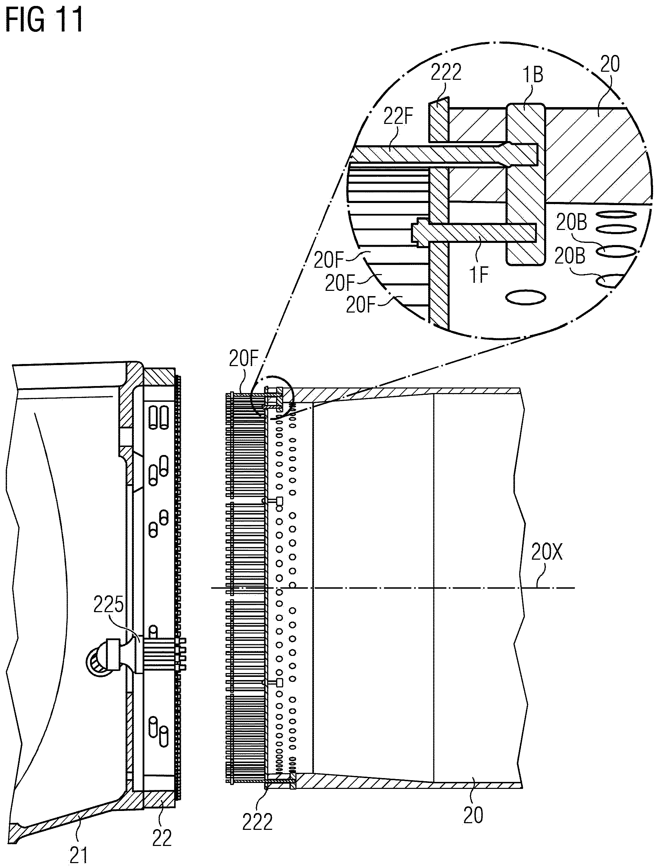

Figure 11 shows how the outer reinforcing plate 222 of the pitch system 22 may be connected over the root end 20R of a rotor blade 20, so that the reinforcing plate 222 can be used to hold the guide arm 10 during a rotor blade installation procedure. The diagram shows an annular arrangement of bushings 20B which will later be used to tighten the root end bolts 20F when the rotor blade 20 is being connected to the pitch system. Several bushings 20B are replaced by custom bushings 1B that extend into the rotor blade interior. Each custom bushing 1B has two threaded holes, one to receive a root end bolt 20F in the usual manner, and one to receive a fastener 1F for attaching the reinforcing plate 222 to the rotor blade root end.

Alternatively, an embodiment may deploy custom bushings that each receives only a fastener 1F for attaching the reinforcing plate 222 to the rotor blade 20. Any such "single-purpose" custom bushing can be placed between two "regular" bushings 20B and can be realised to receive a fastener 1F that is offset towards the interior as shown in the embodiment of Figure 11. Alternatively, a single-purpose custom bushing can be shaped and positioned to receive a fastener 1F that is arranged between adjacent root end bolts. Any such single-purpose custom bushing can be electrically isolated from the reinforcing plate 222 by a suitable insulating layer.

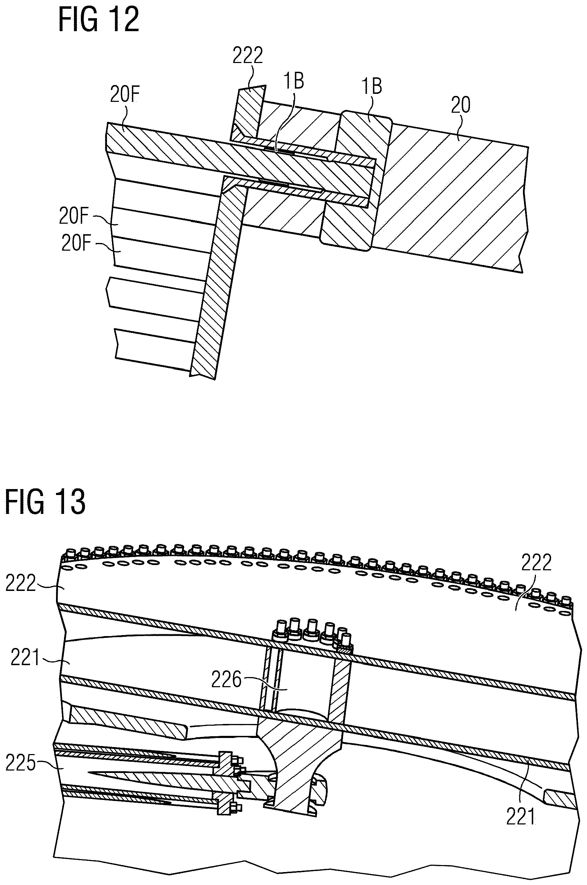

In a further alternative embodiment as shown in Figure 12, a custom bushing can be placed between two "regular" bushings 20B and can serve to attach the reinforcing plate 222 to the rotor blade 20, and also to receive a root end bolt 20F.

After aligning the root end bolts 20F with the pitch ring 22 to complete the landing procedure, the rotor blade 20 is connected to the pitch system 22 using the root end bolts 20F.

Figure 13 illustrates a further aspect of the invention. In the type of pitch system discussed herein, a pitch cylinder 225 is connected to both reinforcing plates 221, 222 by means of a spacer tube 226 positioned between the reinforcing plates 221, 222 and aligned as a continuation of the pitch cylinder head. In an exemplary embodiment of the inventive approach, an arrangement of temporary bolts can be used to secure the spacer tube 226 to the inner reinforcing plate 221 (this step can be done in the manufacturing facility. These temporary bolts can be inserted from inside the hub. After completing the inventive rotor blade landing procedure, the temporary bolts are removed, and permanent bolts can be inserted through the inner reinforcing plate 221, the spacer tube 226, and a matching annular arrangement of holes in the outer reinforcing plate 222.

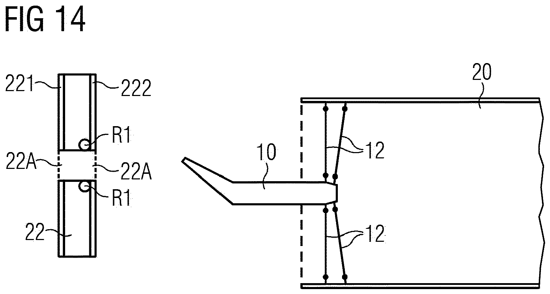

Figure 14 shows a further embodiment of the inventive landing system 1. Here, the inwardly-pointing arm 10 is mounted to the rotor blade 20 by an arrangement of wires and/or struts in the interior space of the root end 20R. In this embodiment, the corresponding pitch system 22 is "closed off" in the usual manner by its outer reinforcing plate 222. Suitably placed apertures 22A in both reinforcing plates 221, 222 allow the guide arm 10 to engage with the pitch system 22. The roller pair(s) can be arranged at the inner face of the outer reinforcing plate 222 as shown here. Suitable access openings 22H can be provided to allow a technician to enter the rotor blade interior in order to dismantle the landing system 1 once the rotor blade 20 is connected to the pitch system 22.

Any access hatch 22H mentioned above can be closed off by a suitable detachable cover, so that an interior space (in the hub 21, pitch system 22 or rotor blade 20) is not exposed to the environment prior to and during the installation procedure.

Although the present invention has been disclosed in the form of preferred embodiments and variations thereon, it will be understood that numerous additional modifications and variations could be made thereto without departing from the scope of the invention. For example, temporary bolts that are only required during the landing procedure can remain in place instead of being removed. The guide arm may be attached to the outer reinforcement plate in a manner different to those shown in the drawings. The guide rollers can be realised in any suitable manner, and are not restricted to the embodiments shown above.

For the sake of clarity, it is to be understood that the use of "a" or "an" throughout this application does not exclude a plurality, and "comprising" does not exclude other steps or elements.

## Claims

1. A landing system (1) for use in a rotor blade installation procedure, which landing system (1) comprises
- a guide arm (10);
- a mounting assembly configured to secure the guide arm (10) to the rotor blade (20) such that the guide arm (10) extends beyond the root end (20R) of the rotor blade (20) ; and
- a guide arm aperture (22A) formed in a reinforcing plate (221) of the pitch system (21) of that rotor blade (20), which guide arm aperture (22A) is dimensioned to allow the guide arm (10) to pass into the interior of the hub (21) during the rotor blade installation procedure.

2. A landing system according to the preceding claim, wherein the guide arm (10) comprises an inner portion (101) extending in a direction parallel to a longitudinal axis (20X) of the rotor blade (20).

3. A landing system according to the preceding claim, wherein the shape of the inner portion (101) matches the shape of a reinforcing plate aperture (22A).

4. A landing system according to any of the preceding claims, wherein the guide arm (10) comprises a tapered outer portion (102) .

5. A landing system according to any of the preceding claims, wherein the outer portion (102) of the guide arm (10) is angled in the downwind direction.

6. A landing system according to any of the preceding claims, comprising a set of rollers (R) arranged at opposite sides of a reinforcing plate aperture (22A).

7. A landing system according to the preceding claim, wherein the rollers (R) are arranged to align the guide arm (10) in a first axial direction (D1).

8. A landing system according to any of the preceding claims, comprising a further set of rollers (R) arranged to align the guide arm (10) in a second axial direction (D2) orthogonal to the first axial direction (D1).

9. A landing system according to any of the preceding claims, wherein the guide arm (10) is mounted to a circular plate (15, 222) arranged over the root end (20R) of the rotor blade (20) .

10. A landing system according to the preceding claim, wherein the circular plate is an outer reinforcing plate (222) of the corresponding pitch system (22), and wherein the guide arm aperture (22A) is formed in an inner reinforcing plate (221) of that pitch system (22).

11. A landing system according to any of the preceding claims, wherein the length (10L) of the guide arm (10) is at least as long as the distance (ΔW) by which the nacelle (23) is wider than the hub (21) at their interface.

12. A method of installing a rotor blade (20) at the hub (21) of a wind turbine (2) using a landing system (1) according to any of claims 1 to 11, which method comprises steps of
- mounting the guide arm (10) of the landing system (1) to the rotor blade (20);
- providing the guide arm aperture (22A) of the landing system (1) in a reinforcing plate of the corresponding pitch system (22);
- lifting the rotor blade (20) to hub height and manoeuvring the rotor blade (20) to insert the guide arm (10) into the reinforcing plate aperture (22A) until the root end (20R) of the rotor blade (20) meets the pitch system (22).

13. A method according to the preceding claim, comprising a subsequent step of securing the rotor blade (20) to the pitch system (22).

14. A method according to any of the preceding method claims, comprising a subsequent step of detaching components (10, R) of the landing system (1).

15. A method according to any of the preceding method claims, comprising a subsequent step of removing the detached components (10, R) of the landing system (1) through the hub (21) .
